# FASCICULE DE BREVET EUROPEEN

(11) **EP 3 113 874 B1**
(45) Date de publication et mention de la délivrance du brevet: **09.05.2018**
(21) Numéro de dépôt: 14718646.4
(22) Date de dépôt: 04.03.2014
(51) Int. Cl.: B01J 13/00, C08J 9/28

(54) **COMPOSITION GELIFIEE POUR GEL MONOLITHIQUE ORGANIQUE, SES UTILISATIONS ET SON PROCEDE DE PREPARATION**
GELIERTE ZUSAMMENSETZUNG FÜR EIN ORGANISCHES MONOLITHISCHES GEL, VERWENDUNGEN DAVON UND VERFAHREN ZUR HERSTELLUNG DAVON
GELLED COMPOSITION FOR ORGANIC MONOLITHIC GEL, USES THEREOF AND PROCESS FOR PREPARING SAME

(43) Date de publication de la demande: 11.01.2017
(73) Titulaire: Hutchinson, 75008 Paris (FR)
(72) Inventeur: DUFOUR, Bruno, F-77430 Champagne Sur Seine (FR); DORIE, Hugo, F-45200 Montargis (FR); SONNTAG, Philippe, F-77210 Avon (FR)
(74) Mandataire: Cabinet Plasseraud
(86) Numéro de dépôt international: PCT/FR2014/050477
(87) Numéro de publication internationale: WO 2015/132475

(56) Documents cités:
- WO-A1-2010/000778
- WO-A1-2014/060906
- BRUNO M M ET AL: "A novel way to maintain resorcinol-formaldehyde porosity during drying: Stabilization of the sol-gel nanostructure using a cationic polyelectrolyte", COLLOIDS AND SURFACES. A, PHYSICACHEMICAL AND ENGINEERING ASPECTS, ELSEVIER, AMSTERDAM, NL, vol. 362, no. 1-3, 5 juin 2010 (2010-06-05), pages 28-32, XP027046589, ISSN: 0927-7757 [extrait le 2010-05-12]
- BRUNO M M ET AL: "Characterization of monolithic porous carbon prepared from resorcinol/formaldehyde gels with cationic surfactant", COLLOIDS AND SURFACES. A, PHYSICACHEMICAL AND ENGINEERING ASPECTS, ELSEVIER, AMSTERDAM, NL, vol. 358, no. 1-3, 5 avril 2010 (2010-04-05), pages 13-20, XP026917493, ISSN: 0927-7757, DOI: 10.1016/J.COLSURFA.2010.01.017 [extrait le 2010-01-15]
- Anna-Liisa Peikolainen ET AL: "Preparation of Low-Density Aerogels from Technical Mixture of Diphenolic Compounds", , 1 janvier 2008 (2008-01-01), XP055144451, Extrait de l'Internet: URL:http://www.isasf.net/fileadmin/files/D ocs/Barcelona/ISASF 2008/PDF/Posters/Materials/P_M_13.pdf [extrait le 2014-10-06] cité dans la demande

## Description

La présente invention concerne une composition carbonée gélifiée formant un gel monolithique polymérique organique apte à former un aérogel par séchage et un monolithe de carbone poreux par pyrolyse de l'aérogel, des utilisations et un procédé de préparation de cette composition carbonée. L'invention s'applique notamment à l'obtention de tels gels organiques ou de tels monolithes de carbone présentant une densité et une conductivité thermique très faible, une surface spécifique au contraire très élevée et une résistance à la compression satisfaisante, pour leur utilisation comme super isolants thermiques (i.e. de conductivité thermique typiquement inférieure ou égale à 40 mW.m⁻¹.K⁻¹ environ) ou comme précurseurs d'électrodes carbonées de supercondensateurs, à titre non limitatif.

Les aérogels sont des matériaux poreux obtenus après gélification puis séchage du gel, dans lequel le liquide servant de solvant a été remplacé par un gaz ou un mélange gazeux. A très faible densité (ou à volume poreux élevé), ces matériaux sont très prometteurs pour des utilisations comme isolants thermiques. En effet, leur nanoporosité permet de limiter les effets de convection de l'air contenu dans les pores.

La préparation des aérogels de très faible densité est cependant compliquée, à cause de leurs propriétés mécaniques limitées qui n'autorisent pas à ce jour un séchage classique en étuve notamment à cause de la vaporisation du solvant lors de ce séchage en étuve qui engendre des contraintes internes dans le matériau détruisant sa nanostructure et y créant des macro-fissures. C'est la raison pour laquelle on utilise conventionnellement un séchage au CO₂ supercritique pour la production de ces aérogels de basse densité. Cette méthode donne de bons résultats sur la stabilité de la nanostructure, mais elle présente l'inconvénient de pénaliser le coût de fabrication de l'aérogel.

Les aérogels de silice, qui sont les plus étudiés pour des applications de super isolants thermiques (ces aérogels peuvent présenter des conductivités thermiques de l'ordre de 0,015 à 0,020 W.m⁻¹.K⁻¹), n'échappent pas à ces constats. Ainsi avec un séchage classique en étuve, ces gels de silice subissent une densification importante et une perte de leur nanostructure. De plus, les fissurations de ces gels créent des fines, ce qui pose des problèmes de toxicité du fait de la libération par la poudre de nanoparticules de silice. Les efforts de recherche se sont alors concentrés sur l'effet de ressort (« spring back » en anglais) des aérogels de silice après modification de la nature chimique de leur surface, et sur la substitution des groupements silanol par des groupements non réactifs permettant de rendre la densification réversible après un séchage évaporatif.

Ce principe a permis la production industrielle de poudre de silice de basse densité sous forme d'aérogel nanostructuré super isolant thermique, mais n'a pas permis la synthèse de matériau monolithique stable, contrairement aux aérogels organiques de haute surface spécifique qui sont eux aussi prometteurs pour des utilisations comme super isolants thermiques.

De manière connue, ces aérogels organiques sont typiquement préparés à partir d'une résine résorcinol formaldéhyde (RF), qui présente l'avantage d'être peu coûteuse et de pouvoir donner un gel mis en oeuvre dans l'eau et pouvant présenter différentes valeurs de porosité et de densité en fonction des conditions de préparation (selon les rapports entre réactifs R et F et le catalyseur, par exemple). De plus, ces aérogels organiques peuvent être pyrolysés sous forme de carbone de haute surface spécifique présentant l'avantage d'absorber les rayonnements infrarouges, et donc de posséder une faible conductivité thermique à haute température. Par contre, ces gels chimiques obtenus par polycondensation des précurseurs sont irréversibles et ne peuvent donc pas être à nouveau mis en oeuvre. De plus, à forte conversion, ces gels deviennent hydrophobes et précipitent, ce qui induit des contraintes mécaniques dans ces matériaux et accroît leur fragilité.

Comme pour les aérogels de silice, il est ainsi nécessaire, pour obtenir des aérogels monolithiques organiques de très basse densité, d'utiliser une technique de séchage suffisamment douce pour éviter une fracturation ou une contraction de la nanostructure et une perte de surface spécifique pour ces aérogels. Ce séchage est classiquement mis en oeuvre via un échange de solvant par un alcool, puis via un séchage au moyen de CO₂ supercritique.

On peut par exemple citer le document US-A-4 997 804 pour la description d'un procédé de fabrication d'un tel aérogel monolithique organique à base de résine résorcinol formaldéhyde, qui utilise ce séchage par échange de solvant puis par fluide supercritique.

Comme indiqué précédemment, un inconvénient majeur de cette technique de séchage est qu'elle est complexe à mettre en oeuvre et très coûteuse.

Par ailleurs, il convient de noter qu'une utilisation d'un tel aérogel comme isolant thermique requiert nécessairement une forte résistance à la compression de cet aérogel. En effet, en cas de choc sur un aérogel déformable ou fragile, des fractures et/ou une perte de porosité peuvent avoir lieu, ce qui s'accompagne d'une perte d'isolation thermique. Il est donc hautement désirable de développer des aérogels organiques de haute surface spécifique pouvant être obtenus par une méthode de séchage simple et possédant en outre une bonne résistance à la compression.

La Demande de Brevet déposée par la Demanderesse sous PCT/IB2013/059208 (WO2014/060906) présente un procédé permettant d'obtenir un aérogel organique super isolant thermique e.g. issu des précurseurs résorcinol et formaldéhyde, sans échange de solvant ni séchage par fluide supercritique, par polymérisation dans un solvant aqueux de ces précurseurs en présence d'un polyélectrolyte cationique dissous dans ce solvant et d'un catalyseur.

Les aérogels obtenus par le procédé décrit dans ce dernier document procurent des résultats satisfaisants. Néanmoins, la Demanderesse a cherché dans ses recherches récentes à améliorer encore leur résistance en compression qui doit être élevée pour certaines applications, en particulier pour des matériaux exposés à de fortes contraintes mécaniques, et à réduire parallèlement le coût de fabrication de ces aérogels notamment à cause du prix relativement élevé du résorcinol.

L'article « A novel way to maintain resorcinol-formaldehyde porosity during drying: Stabilization of the sol-gel nanostructure using a cationic polyelectrolyte », Mariano M. Bruno et al., 2010, divulgue un carbone monolithique qui est issu d'un gel aqueux de résine RF à base d'un unique résorcinol non substitué et de formaldéhyde et qui est utilisable dans un supercondensateur. Ce gel comprend, en plus d'un catalyseur basique, un polyélectrolyte cationique hydrosoluble constitué de poly(chlorure de diallyldiméthyl ammonium) et permettant de conserver la porosité du gel suite à son séchage à l'air.

L'article "Preparation of Low-density Aerogels From Technical Mixture of Diphenolic Compounds" de A. L. Peikolainen et al. enseigne de polycondenser à 60° C du formaldéhyde avec un catalyseur basique (KOH) dans du méthanol et un mélange dit Honeyol® (à base d'alkyl résorcinols et de résorcinol), pour obtenir un aérogel de faible densité après séchage par CO₂ supercritique.

Un inconvénient du procédé décrit dans cet article, qui est mis en oeuvre à chaud dans un solvant non aqueux avec ce catalyseur basique, est que l'aérogel obtenu ne satisfait pas aux critères précités de conductivité thermique très faible et de résistance à la compression satisfaisante pour un super isolant thermique.

Un but de la présente invention est de proposer une composition carbonée gélifiée formant un gel monolithique polymérique organique apte à former un aérogel par séchage et un monolithe de carbone poreux par pyrolyse dudit aérogel qui soient super isolants thermiques (i.e. de conductivité thermique inférieure ou égale à 40 mW.m⁻¹.K⁻¹) et qui permettent de remédier aux inconvénients précités.

Ce but est atteint en ce que la Demanderesse vient de découvrir d'une manière surprenante que l'ajout en phase aqueuse, à des précurseurs de type polyhydroxybenzènes non substitués R et R' et polyhydroxybenzène(s) substitué(s) par un ou des groupe(s) alkyle(s) et de type formaldéhyde(s), d'un additif particulier constitué d'un polyélectrolyte cationique hydrosoluble, permet d'obtenir une solution comprenant une résine
qui, après gélification pour l'obtention d'un hydrogel et séchage, conduit à un aérogel super isolant thermique qui présente à la fois une très faible densité, une haute surface spécifique et une résistance à la compression satisfaisante sous des contraintes mécaniques élevées, en pouvant se passer d'un séchage par échange de solvant et par fluide supercritique.

Une composition carbonée gélifiée selon l'invention, qui comprend ainsi une résine issue au moins en partie de polyhydroxybenzènes R et H et de formaldéhyde(s) F, lesdits polyhydroxybenzènes comprenant au moins un polyhydroxybenzène non substitué R et au moins un polyhydroxybenzène substitué par un ou des groupe(s) alkyle(s), est telle que lesdits polyhydroxybenzènes comprennent plusieurs dits polyhydroxybenzènes non substitués R et R' et que la composition comprend un polyélectrolyte cationique hydrosoluble P.

Avantageusement, une telle composition selon l'invention peut présenter une conductivité thermique inférieure ou égale à 40 mW.m⁻¹.K⁻¹, et encore plus avantageusement inférieure ou égale à 30 mW.m⁻¹.K⁻¹.

On notera que les compositions de l'invention présentent un coût de fabrication réduit en comparaison de celles précitées exclusivement issues de résorcinol à titre de précurseur polyhydroxybenzène.

On notera également qu'une composition d'aérogel selon l'invention, qui est à base (i.e. majoritairement constituée en masse) de cette résine et qui incorpore ce polyélectrolyte cationique, peut être avantageusement obtenue en utilisant un séchage en étuve bien plus simple à mettre en oeuvre et pénalisant moins le coût de production du gel que le séchage par CO₂ supercritique. En effet, la Demanderesse a découvert que cet additif permet de conserver la forte porosité du gel obtenu suite à ce séchage en étuve et de lui conférer une très faible densité alliée à une surface spécifique et un volume poreux élevés.

Par « gel », on entend de manière connue le mélange d'une matière colloïdale et d'un liquide, qui se forme spontanément ou sous l'action d'un catalyseur par la floculation et la coagulation d'une solution colloïdale.

Par « polymère hydrosoluble », on entend un polymère qui peut être solubilisé dans l'eau sans adjonction d'additifs (de tensioactifs notamment), à la différence d'un polymère hydrodispersable qui est susceptible de former une dispersion lorsqu'il est mélangé à de l'eau.

Par « à titre minoritaire en masse » et « à titre majoritaire en masse », on entend selon une fraction massique inférieure et supérieure à 50 %, respectivement.

Selon une autre caractéristique de l'invention, la composition peut comprendre le produit d'une réaction de mélangeage, dans un solvant aqueux W :
- d'un premier dit polyhydroxybenzène non substitué R, et
- d'un pré-mélange H comprenant, à titre minoritaire en masse, un second dit polyhydroxybenzène non substitué R' identique ou différent dudit premier polyhydroxybenzène non substitué R et, à titre majoritaire en masse, ledit au moins un polyhydroxybenzène substitué.

De préférence, dans ledit produit de la réaction de mélangeage, ledit pré-mélange H est présent à titre égal ou majoritaire en moles par rapport audit premier polyhydroxybenzène non substitué R. En d'autres termes, le rapport molaire H / (R+H) satisfait préférentiellement à la double inégalité 0,5 ≤ H / (R+H) < 1, soit R/H ≤ 1 ou encore H ≥ R.

Egalement à titre préférentiel, ledit pré-mélange H comprend selon une fraction massique inférieure à 10 % ledit second polyhydroxybenzène non substitué R' et, selon une fraction massique supérieure à 80 %, plusieurs dits polyhydroxybenzènes substitués.

A titre encore plus préférentiel, lesdits premier et second polyhydroxybenzènes non substitués R et R' sont chacun un résorcinol, et la composition comprend plusieurs dits polyhydroxybenzènes substitués comprenant majoritairement en masse des méthyl résorcinols et minoritairement en masse des diméthyl résorcinols et un éthyl résorcinol.

Encore plus préférentiellement :
- lesdits méthyl résorcinols comprennent majoritairement en masse du 5-méthyl résorcinol et minoritairement en masse du 4-méthyl résorcinol et du 2-méthyl résorcinol,
- lesdits diméthyl résorcinols comprennent du 2,5-diméthyl résorcinol et du 4,5-diméthyl résorcinol, et
- ledit éthyl résorcinol est le 5-éthyl résorcinol.

Avantageusement, la composition peut présenter pour ledit aérogel une densité inférieure ou égale à 0,20 et une résistance à la compression, définie pour une compression d'une plaque formée dudit aérogel d'épaisseur égale à 9 mm suivant 50 % de ladite épaisseur, qui est égale ou supérieure à 0,15 MPa, voire à 2 MPa.

Selon une autre caractéristique de l'invention, la composition peut comprendre le produit d'une réaction de polymérisation avantageusement à température ambiante (i.e. environ 22° C) dans un solvant aqueux W desdits polyhydroxybenzènes R et H et formaldéhyde(s) F, en présence dudit polyélectrolyte cationique P dissous dans le solvant et d'un catalyseur C spécifiquement acide, ce produit de la polymérisation comprenant le polyélectrolyte cationique P selon une fraction massique très réduite comprise entre 0,2 % et 2 % (de préférence entre 0,3 % et 1 %).

Ledit au moins un polyélectrolyte peut être tout polyélectrolyte cationique totalement soluble dans l'eau et de force ionique faible.

De préférence, il s'agit d'un polymère organique choisi dans le groupe constitué par les sels d'ammonium quaternaire, le poly(chlorure de vinylpyridinium), la poly(éthylène imine), la poly(vinyl pyridine), le poly(chlorhydrate d'allylamine), le poly(chlorure de triméthylammonium éthylméthacrylate), le poly(acrylamide-co-chlorure de diméthylammonium) et leurs mélanges.

A titre encore plus préférentiel, ledit au moins un polyélectrolyte cationique hydrosoluble P est un sel comportant des unités issues d'un ammonium quaternaire choisi parmi les poly(halogénure de diallyldiméthylammonium) et est de préférence le poly(chlorure de diallyldiméthylammonium) ou le poly(bromure de diallyldiméthylammonium).

Parmi les polymères précurseurs de ladite résine qui sont utilisables dans la présente invention, on peut citer les polymères résultant de la polycondensation de monomères polyhydroxybenzènes respectivement non substitué(s) et substitué(s) par un ou des groupes alkyle(s) et d'au moins un monomère formaldéhyde. Cette réaction de polymérisation peut impliquer des monomères additionnels du type polyhydroxybenzène ou non. Les polyhydroxybenzènes utilisables sont préférentiellement des di- ou des tri-hydroxybenzènes, et avantageusement le résorcinol (1,3-dihydroxybenzène) et/ou le catéchol (1,2-dihydroxybenzène), l'hydroquinone (1,4-dihydroxybenzène) ou le phloroglucinol (benzène-1,3,5-triol).

On peut par exemple utiliser les polyhydroxybenzène(s) R et H et le(s) formaldéhyde(s) F suivant un rapport molaire (R+H) / F compris entre 0,3 et 0,7.

Selon une autre caractéristique de l'invention, ladite composition carbonée peut avantageusement présenter une surface spécifique comprise entre 400 m²/g et 1200 m²/g, et/ou un volume poreux compris entre 0,1 cm³/g et 3 cm³/g, et/ou un diamètre moyen de pores compris entre 3 nm et 30 nm, et/ou une densité comprise entre 0,04 et 0,4 et par exemple comprise entre 0,1 et 0,2.

Un gel monolithique polymérique organique selon l'invention, tel qu'un aérogel, est constitué d'une composition carbonée telle que définie ci-dessus.

Avantageusement, ce gel et le monolithe de carbone obtenu par sa pyrolyse peuvent présenter une conductivité thermique comprise entre 10 mW.m⁻¹.K⁻¹ et 40 mW.m⁻¹.K⁻¹ et par exemple comprise entre 20 et 35 mW.m⁻¹.K⁻¹, ce gel étant utilisable pour l'isolation thermique d'un bâtiment ou pour former un précurseur d'électrode carbonée de supercondensateur.

Un procédé de préparation selon l'invention d'une composition carbonée telle que définie ci-dessus formant un aérogel, comprend :
a) une polymérisation dans un solvant aqueux W desdits polyhydroxybenzène(s) R et formaldéhyde(s) F, en présence dudit au moins un polyélectrolyte cationique P dissous dans ce solvant et d'un catalyseur acide C, pour l'obtention d'une solution à base de ladite résine,
b) une gélification de la solution obtenue en a) pour l'obtention d'un gel de ladite résine, et
c) un séchage du gel obtenu en b) pour l'obtention dudit gel monolithique polymérique organique.

Pour l'obtention du monolithe de carbone poreux, l'on soumet à une pyrolyse le gel séché obtenu en c).

Avantageusement, l'on peut mettre en oeuvre l'étape a) :
a1) en dissolvant dans ledit solvant aqueux constitué d'eau lesdits polyhydroxybenzènes R et H et ledit polyélectrolyte cationique P, lequel est utilisé selon une fraction massique dans la composition comprise entre 0,2 et 2 %, puis
a2) en ajoutant à la dissolution obtenue le(s)dit(s) formaldéhyde(s) F puis ledit catalyseur acide C.

Egalement avantageusement :
- ce procédé de l'invention comprend, avant l'étape a), une étape a0) comprenant un mélangeage d'un premier dit polyhydroxybenzène non substitué R et d'un pré-mélange H,
- ledit pré-mélange H comprend, à titre minoritaire en masse, un second dit polyhydroxybenzène non substitué identique ou différent dudit premier polyhydroxybenzène non substitué et, à titre majoritaire en masse, ledit au moins un polyhydroxybenzène substitué, et
- l'on utilise à l'étape a0) ledit pré-mélange H à titre égal ou majoritaire en masse par rapport audit premier polyhydroxybenzène non substitué R.

De préférence, ce pré-mélange H comprend selon une fraction massique inférieure à 10 % ledit second polyhydroxybenzène non substitué R' et, selon une fraction massique supérieure à 80 %, plusieurs dits polyhydroxybenzènes substitués.

A titre encore plus préférentiel, les premier et second polyhydroxybenzènes non substitués R et R' sont chacun un résorcinol, et le pré-mélange H comprend plusieurs dits polyhydroxybenzènes substitués comprenant :
- selon une fraction massique comprise entre 60 et 70 %, des méthyl résorcinols qui comprennent majoritairement en masse du 5-méthyl résorcinol et minoritairement en masse du 4-méthyl résorcinol et du 2-méthyl résorcinol, et
- selon une fraction massique comprise entre 20 et 30 %:
   * des diméthyl résorcinols, lesquels comprennent du 2,5-diméthyl résorcinol et du 4,5-diméthyl résorcinol, et
   * un éthyl résorcinol qui est le 5-éthyl résorcinol.

Avantageusement, l'on met en oeuvre l'étape c) par un séchage à l'air humide par exemple dans une étuve, sans échange de solvant ni séchage par fluide supercritique, pour l'obtention dudit aérogel.

Avantageusement et comme indiqué ci-dessus, l'on peut mettre en oeuvre l'étape a) en utilisant ledit au moins un polyélectrolyte P selon une fraction massique dans la composition comprise entre 0,2 % et 2 % et de préférence entre 0,3 % et 1 %.

A titre de catalyseur acide C utilisable à l'étape a), on peut par exemple citer des catalyseurs tels que des solutions aqueuses d'acide chlorhydrique, sulfurique, nitrique, acétique, phosphorique, trifluoroacétique, trifluorométhanesulfonique, perchlorique, oxalique, toluènesulfonique, dichloroacétique, formique.

On utilise à l'étape a) un rapport massique (R + H) /W dudit polyhydroxybenzène R et dudit pré-mélange H sur le solvant aqueux W, qui est de préférence compris entre 0,001 et 0,07 et par exemple entre 0,01 et 0,05.

On notera que ce procédé de préparation en phase aqueuse selon l'invention permet ainsi d'obtenir des structures poreuses contrôlées qui varient en fonction des conditions de synthèse. Il est ainsi possible d'obtenir une structure de faible densité uniquement nanoporeuse (i.e. avec un diamètre de pores inférieur à 50 nm), ou bien avec une coexistence entre des nano- et des macropores (i.e. avec un diamètre de pores supérieur à 50 nm).

D'autres caractéristiques, avantages et détails de la présente invention ressortiront à la lecture de la description suivante de plusieurs exemples de réalisation de l'invention, donnés à titre illustratif et non limitatif, donnés en comparaison d'un exemple « témoin » et d'un exemple « non conforme à l'invention.

### Exemples de préparation d'un aérogel « témoin » G0, de trois aérogels G1, G2, G3 selon l'invention et d'un aérogel G4 non conforme à l'invention :

Les exemples qui suivent illustrent la préparation :
- d'un gel monolithique organique « témoin » G0 exclusivement issu d'un résorcinol R à titre de précurseur polyhydroxybenzène, à l'instar de l'aérogel obtenu dans la Demande de Brevet précitée au nom de la Demanderesse PCT/IB2013/059208, (WO2014/060906)
- de trois gels monolithiques organiques G1 à G3 selon l'invention qui sont chacun issus d'un précurseur résorcinol R mélangé à un pré-mélange H à base de résorcinol et de résorcinols substitués par des groupes alkyles, à titre de précurseurs polyhydroxybenzènes, et
- d'un gel monolithique organique G4 non conforme à l'invention, exclusivement issu de ce pré-mélange H à base de résorcinol et de résorcinols substitués par des groupes alkyles, à titre de précurseurs polyhydroxybenzènes, à l'instar de l'article précité « Préparation of Low-density Aerogels From Technical Mixture of Diphenolic Compounds" de A. L. Peikolainen et al ».

On a utilisé comme réactifs de départ :
- le résorcinol (R) de chez Acros Organics, pur à 98 %,
- le formaldéhyde (F) de chez Acros Organics, pur à 37 %,
- un catalyseur acide (C) constitué d'acide chlorhydrique,
- le poly(chlorure de diallyldiméthylammonium) (P), pur à 35 % (en solution dans de l'eau W), et
- l'Honeyol® (H), commercialisé par la société VKG (Viru Keemia Grupp), qui est de manière connue un pré-mélange de résorcinol R' et de dérivés alkylés de résorcinol et dont la formulation est détaillée dans le tableau 1 ci-après (on a déterminé la masse molaire M de ce pré-mélange H à l'aide des fractions massiques de ses principaux ingrédients, et l'on est ainsi parvenu à une masse molaire M d'environ 121 g/mol⁻¹).

**Tableau 1 :**

| **Constituants du pré-mélange H de dénomination Honeyol®** | **Masse molaire (g.mol⁻¹)** | **Fractions massiques (%)** |
|---|---|---|
| méthyl résorcinols : | 124 | 64,1 |
| 4-méthyl résorcinol | - | 2,8 |
| 5-méthyl résorcinol | - | 59,6 |
| 2-méthyl résorcinol | - | 1,7 |
| diméthyl résorcinols : | 138 | 16,0 |
| 2,5-diméthyl résorcinol | - | 8,4 |
| 4,5-diméthyl résorcinol | - | 7,6 |
| 5-éthyl resorcinol | 138 | 9,8 |
| résorcinol R' | 110 | 5,7 |
| monohydroxybenzènes | - | 0,8 |
| non identifié | - | 3,6 |

On a préparé ces gels G0 à G4 comme suit.

On a dans un premier temps dissous, dans un récipient contenant de l'eau W, le résorcinol R et/ou le pré-mélange H (R seul pour le gel G0 non issu de H, R + H pour les gels G1, G2, G3 et H seul pour le gel G4 non issu de R) ainsi que le polyélectrolyte P. Puis après totale dissolution de R et/ou H et de P, on a ajouté le formaldéhyde F. On a ajusté au pH approprié chaque solution polymérique obtenue avec le catalyseur acide C, étant précisé que l'on a réalisé l'ensemble de ces opérations à température ambiante (à environ 22° C).

On a dans un second temps transvasé chaque solution obtenue dans des moules en Téflon®, que l'on a ensuite placés dans un four à 90° C pendant 24 h pour effectuer la gélification.

On a ensuite procédé au séchage de chaque hydrogel obtenu en enceinte humide à 85° C avec un taux d'humidité de 90 % pendant 24 heures, suivi d'un séchage à 105° C pendant 24 h.

Au tableau 2 ci-après figurent les ratios suivants pour chaque gel G0 à G4, en plus du pH mesuré pour chaque solution polymérique obtenue par ajout du catalyseur C :
- (R+H)/F est le rapport molaire du ou des précurseur(s) résorcinol R et/ou pré-mélange H (avec R+H = R pour l'aérogel G0 et R+H = H pour l'aérogel G4) sur le précurseur formaldéhyde F,
- H/(R+H) est le rapport molaire du précurseur pré-mélange H sur le(s) précurseur(s) résorcinol R et/ou pré-mélange H (avec H = 0 pour l'aérogel G0 et R = 0 pour l'aérogel G4),
- (R+H)/W est le rapport massique du ou des précurseur(s) résorcinol R et/ou pré-mélange H sur l'eau W, et
- P désigne la fraction massique du polyélectrolyte cationique dans la composition de chaque aérogel G0 à G4.

**Tableau 2 :**

| Quantités de réactifs/procédé | **G0** | **G1** | **G2** | **G3** | **G4** |
|---|---|---|---|---|---|
| H/(R+H) | 0 | 0,5 | 0,5 | 0,7 | 1 |
| (R+H)/F | 0,5 | 0,38 | 0,5 | 0,38 | 0,5 |
| (R+H) /W | 0,03 | 0,03 | 0,03 | 0,03 | 0,03 |
| P | 0,4 % | 0,4 % | 0,4 % | 0,4 % | 0,4 % |
| pH | 1,8 | 1,8 | 1,8 | 1,8 | 1,8 |

Comme visible au tableau 2, le rapport molaire H / (R+H) des aérogels selon l'invention satisfait avantageusement à 0,5 ≤ H / (R+H) < 1, soit H ≥ R.

Le tableau 3 ci-après recense les densités des aérogels G0 à G4 obtenus, leurs résistances mesurées à une compression relative de 50 % et leurs conductivités thermiques mesurées à 22° C (avec un conductivimètre de Neotim) selon la technique du fil chaud.

On a mesuré à 23° C les propriétés mécaniques en compression de plaques constituées des aérogels G0 à G4 à l'aide d'un dynamomètre DY35 n°I_62 équipé d'un capteur 1 kN (I_62_02) à une vitesse de 5 mm/min. jusqu'à une déformation maximale de 50 % (i.e. pour une compression maximale correspondant à 50 % de l'épaisseur initiale de chaque plaque). On a utilisé pour ces mesures des plaques de 9 mm d'épaisseur, que l'on a découpées au cutter pour qu'elles présentent des dimensions d'environ 13 mm x 13 mm. On a mesuré au réglet les dimensions réelles de chaque plaque pour le calcul des contraintes au moyen du logiciel « Testworks ».

**Tableau 3 :**

| Propriétés des aérogels | G0 | **G1** | **G2** | **G3** | G4 |
|---|---|---|---|---|---|
| Densité | 0,08 | 0,11 | 0,12 | 0,18 | - |
| Résistance à 50 % de compression (MPa) | 0,14 | 0,15 | 0,3 | > 2 | - |
| Conductivité thermique (mW.m⁻¹K⁻¹) | 24 | 24 | 26 | 28 | - |

Ce tableau 3 montre que les trois aérogels selon l'invention G1, G2 et G3 préparés à partir de mélanges de résorcinol R et du pré-mélange H contenant du résorcinol R' et des dérivés de résorcinol possèdent, d'une part, des propriétés de super isolant thermique proches de celle de l'aérogel G0 obtenu à partir du seul résorcinol R et, d'autre part, une meilleure résistance en compression que celle de cet aérogel « témoin » G0 qui rend ces aérogels de l'invention encore mieux adaptés à l'isolation thermique dans les bâtiments où ils sont soumis à de fortes contraintes mécaniques.

En particulier, le gel G3 selon l'invention, qui est notamment caractérisé par des rapports molaires H/(R+H) et (R+H)/F respectivement compris entre 0,6 et 0,8 et entre 0,30 et 0,45 environ, présente avantageusement à la fois une faible conductivité thermique (inférieure à 30 mW.m⁻¹K⁻¹) et une excellente résistance à la compression très nettement supérieure à celle de l'aérogel « témoin » G0 (voir le rapport proche de 15 entre les résistances respectives de G3 et de G0).

Il convient de noter que l'aérogel G4 non conforme à l'invention, du fait qu'il a été obtenu sans résorcinol R, a cassé au séchage et n'a donc pas pu être caractérisé, que ce soit par sa densité, sa résistance à la compression ou par sa conductivité thermique.

On notera que les compositions d'aérogels entrant dans le cadre de la présente invention ne sont pas limitées à celles testés dans les trois exemples précités de gels G1, G2 et G3, mais qu'elles peuvent de manière générale s'étendre à des aérogels issus d'un précurseur formaldéhyde F et d'un premier précurseur polyhydroxybenzène non substitué R (e.g. le résorcinol ou le catéchol) combiné à un pré-mélange d'un second précurseur polyhydroxybenzène non substitué R' et de dérivés alkylés de ce dernier.

## Revendications

1. Composition carbonée gélifiée formant un gel monolithique polymérique organique apte à former un aérogel par séchage et un monolithe de carbone poreux par pyrolyse dudit aérogel, la composition comprenant une résine issue au moins en partie de polyhydroxybenzènes H et de formaldéhyde(s) F, lesdits polyhydroxybenzènes comprenant au moins un polyhydroxybenzène non substitué R' et au moins un polyhydroxybenzène substitué par un ou des groupe(s) alkyle(s), **caractérisée en ce que** lesdits polyhydroxybenzènes comprennent plusieurs dits polyhydroxybenzènes non substitués R et R' et **en ce que** la composition comprend un polyélectrolyte cationique hydrosoluble P.

2. Composition gélifiée selon la revendication 1, **caractérisée en ce que** la composition présente une conductivité thermique inférieure ou égale à 40 mW.m⁻¹.K⁻¹.

3. Composition gélifiée selon la revendication 1 ou 2, **caractérisée en ce que** la composition comprend un produit d'une réaction de mélangeage, dans un solvant aqueux :
- d'un premier dit polyhydroxybenzène non substitué R, et
- d'un pré-mélange H comprenant :
* à titre minoritaire en masse, un second dit polyhydroxybenzène non substitué R' identique ou différent dudit premier polyhydroxybenzène non substitué, et
* à titre majoritaire en masse, ledit au moins un polyhydroxybenzène substitué.

4. Composition gélifiée selon la revendication 3, **caractérisée en ce que** dans ledit produit de la réaction de mélangeage, ledit pré-mélange H est présent à titre égal ou majoritaire en moles par rapport audit premier polyhydroxybenzène non substitué R.

5. Composition gélifiée selon la revendication 4, **caractérisée en ce que** ledit pré-mélange H comprend selon une fraction massique inférieure à 10 % ledit second polyhydroxybenzène non substitué R' et, selon une fraction massique supérieure à 80 %, plusieurs dits polyhydroxybenzènes substitués.

6. Composition gélifiée selon une des revendications 3 à 5, **caractérisée en ce que** lesdits premier et second polyhydroxybenzènes non substitués R et R' sont chacun un résorcinol, et **en ce que** la composition comprend plusieurs dits polyhydroxybenzènes substitués comprenant majoritairement en masse des méthyl résorcinols et minoritairement en masse des diméthyl résorcinols et un éthyl résorcinol.

7. Composition gélifiée selon la revendication 6, **caractérisée en ce que** lesdits méthyl résorcinols comprennent majoritairement en masse du 5-méthyl résorcinol et minoritairement en masse du 4-méthyl résorcinol et du 2-méthyl résorcinol, **en ce que** lesdits diméthyl résorcinols comprennent du 2,5-diméthyl résorcinol et du 4,5-diméthyl résorcinol, et **en ce que** ledit éthyl résorcinol est le 5-éthyl résorcinol.

8. Composition gélifiée selon une des revendications précédentes, **caractérisée en ce que** la composition présente pour ledit aérogel une densité inférieure ou égale à 0,20 et une résistance à la compression, définie pour une compression d'une plaque formée dudit aérogel d'épaisseur égale à 9 mm suivant 50 % de ladite épaisseur, qui est égale ou supérieure à 0,15 MPa, voire à 2 MPa.

9. Composition gélifiée selon une des revendications précédentes, **caractérisée en ce qu'**elle comprend le produit d'une réaction de polymérisation dans un solvant aqueux W desdits polyhydroxybenzènes R et H et formaldéhyde(s) F, en présence dudit polyélectrolyte cationique P dissous dans le solvant et d'un catalyseur acide C, le produit de la réaction de polymérisation comprenant ledit polyélectrolyte cationique selon une fraction massique comprise entre 0,2 % et 2 %.

10. Composition gélifiée selon une des revendications précédentes, **caractérisée en ce que** ledit polyélectrolyte cationique hydrosoluble P est un polymère organique choisi dans le groupe constitué par les sels d'ammonium quaternaire, le poly(chlorure de vinylpyridinium), la poly(éthylène imine), la poly(vinyl pyridine), le poly(chlorhydrate d'allylamine), le poly(chlorure de triméthylammonium éthylméthacrylate), le poly(acrylamide-co-chlorure de diméthylammonium) et leurs mélanges.

11. Composition gélifiée selon la revendication 10, **caractérisée en ce que** ledit polyélectrolyte cationique hydrosoluble P est un sel comportant des unités issues d'un ammonium quaternaire choisi parmi les poly(halogénure de diallyldiméthylammonium) et est de préférence le poly(chlorure de diallyldiméthylammonium) ou le poly(bromure de diallyldiméthylammonium).

12. Utilisation d'une composition gélifiée selon une des revendications précédentes pour l'isolation thermique d'un bâtiment ou pour former un précurseur d'électrode carbonée de supercondensateur.

13. Procédé de préparation d'une composition gélifiée formant un aérogel selon une des revendications 1 à 11, **caractérisé en ce qu'**il comprend :
a) une polymérisation à température ambiante dans un solvant aqueux W desdits polyhydroxybenzènes R et H et formaldéhyde(s) F, en présence dudit polyélectrolyte cationique P dissous dans le solvant et d'un catalyseur acide C, pour l'obtention d'une solution comprenant ladite résine,
b) une gélification de la solution obtenue en a) pour l'obtention d'un hydrogel de ladite résine, et
c) un séchage de l'hydrogel obtenu en b) pour l'obtention dudit aérogel.

14. Procédé de préparation selon la revendication 13, **caractérisé en ce que** l'on met en oeuvre l'étape a) :
a1) en dissolvant dans ledit solvant aqueux constitué d'eau lesdits polyhydroxybenzènes R et H et ledit polyélectrolyte cationique P, lequel est utilisé selon une fraction massique dans la composition comprise entre 0,2 et 2 %, puis
a2) en ajoutant à la dissolution obtenue le(s)dit(s) formaldéhyde(s) F puis ledit catalyseur acide C.

15. Procédé de préparation selon la revendication 13 ou 14, **caractérisé en ce qu'**il comprend, avant l'étape a), une étape a0) comprenant un mélangeage d'un premier dit polyhydroxybenzène non substitué R et d'un pré-mélange H,
**en ce que** ledit pré-mélange H comprend, à titre minoritaire en masse, un second dit polyhydroxybenzène non substitué R' identique ou différent dudit premier polyhydroxybenzène non substitué et, à titre majoritaire en masse, ledit au moins un polyhydroxybenzène substitué, et
**en ce que** l'on utilise à l'étape a0) ledit pré-mélange H à titre égal ou majoritaire en masse par rapport audit premier polyhydroxybenzène non substitué R.

16. Procédé de préparation selon la revendication 15, **caractérisé en ce que** ledit pré-mélange H comprend selon une fraction massique inférieure à 10 % ledit second polyhydroxybenzène non substitué R' et, selon une fraction massique supérieure à 80 %, plusieurs dits polyhydroxybenzènes substitués.

17. Procédé de préparation selon la revendication 15 ou 16, **caractérisé en ce que** lesdits premier et second polyhydroxybenzènes non substitués R et R' sont chacun un résorcinol, et **en ce que** ledit pré-mélange H comprend plusieurs dits polyhydroxybenzènes substitués comprenant :
- selon une fraction massique comprise entre 60 et 70 %, des méthyl résorcinols qui comprennent majoritairement en masse du 5-méthyl résorcinol et minoritairement en masse du 4-méthyl résorcinol et du 2-méthyl résorcinol, et
- selon une fraction massique comprise entre 20 et 30 %:
* des diméthyl résorcinols, lesquels comprennent du 2,5-diméthyl résorcinol et du 4,5-diméthyl résorcinol, et
* un éthyl résorcinol qui est le 5-éthyl résorcinol.

18. Procédé de préparation selon une des revendications 13 à 17, **caractérisé en ce que** l'on met en oeuvre l'étape c) par un séchage à l'air humide par exemple dans une étuve, sans échange de solvant ni séchage par fluide supercritique, pour l'obtention dudit aérogel.

## Patentansprüche

1. Gelierte Kohlenstoffzusammensetzung, welche ein organisches polymeres monolithisches Gel bildet, das dazu geeignet ist, durch Trocknung ein Aerogel zu bilden und durch Pyrolyse des Aerogels einen porösen Kohlenstoffmonolithen, wobei die Zusammensetzung ein Harz umfasst, welches wenigstens teilweise aus Polyhydroxybenzenen H und Formaldehyd(en) F stammt, wobei die Polyhydroxybenzene wenigstens ein nicht substituiertes Polyhydroxybenzen R' und wenigstens ein mit einer oder mehreren Alkylgruppen substituiertes Polyhydroxybenzen umfassen, **dadurch gekennzeichnet, dass** die Polyhydroxybenzene mehrere nicht substituierte Polyhydroxybenzene R und R' aufweisen und dass die Zusammensetzung einen wasserlöslichen kationischen Polyelektrolyten umfasst.

2. Gelierte Zusammensetzung nach Anspruch 1, **dadurch gekennzeichnet, dass** die Zusammensetzung eine thermische Leitfähigkeit kleiner oder gleich 40 mW.m⁻¹.K⁻¹ aufweist.

3. Gelierte Zusammensetzung nach Anspruch 1 oder 2, **dadurch gekennzeichnet, dass** die Zusammensetzung ein Produkt aus einer Mischungsreaktion in einer wässrigen Lösung aufweist:
- aus einem ersten nicht substituierten Polyhydroxybenzen R, und
- einer Vormischung H, umfassend:
* als Nebenmasse ein zweites nicht substituiertes Polyhydroxybenzen R', das mit dem ersten nicht substituierten Polyhydroxybenzen identisch oder von ihm verschieden ist, und
* als Hauptmasse das wenigstens eine substituierte Polyhydroxybenzen.

4. Gelierte Zusammensetzung nach Anspruch 3, **dadurch gekennzeichnet, dass** in dem Produkt der Mischungsreaktion die Vormischung H in gleicher oder größerer Molmenge vorliegt als das erste nicht substituierte Polyhydroxybenzen R.

5. Gelierte Zusammensetzung nach Anspruch 4, **dadurch gekennzeichnet, dass** die Vormischung H mit einem Massenanteil kleiner 10% das zweite nicht substituierte Polyhydroxybenzen R umfasst und mit einem Massenanteil größer 80% mehrere der substituierten Polyhydroxybenzene.

6. Gelierte Zusammensetzung nach einem der Ansprüche 3 bis 5, **dadurch gekennzeichnet, dass** die ersten und zweiten nicht substituierten Polyhydroxybenzene R und R'jeweils ein Resorcinol sind, und dass die Zusammensetzung mehrere substituierte Polyhydroxybenzene umfasst, die als größeren Massenanteil Methylresorcinole und als kleineren Massenanteil Dimethylresorcinole und ein Ethylresorcinol aufweisen.

7. Gelierte Zusammensetzung nach Anspruch 6, **dadurch gekennzeichnet, dass** die Methylresorcinole als größeren Massenanteil 5-Methyl-Resorcinol und als kleineren Massenanteil 4-Methyl-Resorcinol und 2-Methyl-Resorcinol umfassen, dass die Dimethylresorcinole 2,5-Dimethylresorcinol und 4,5-Dimethylresorcinol umfassen und dass das Ethyl-Resorcinol 5-Ethylresorcinol ist.

8. Gelierte Zusammensetzung nach einem der vorhergehenden Ansprüche, **dadurch gekennzeichnet, dass** die Zusammensetzung bei dem Aerogel eine Dichte kleiner gleich 0,20 und einen Kompressionswiderstand aufweist, der für eine Kompression einer aus dem Aerogel gebildeten Platte mit einer Dicke von 9 mm nach 50% der Dicke, größer gleich 0,15 MPa, oder 2 MPa beträgt.

9. Gelierte Zusammensetzung nach einem der vorhergehenden Ansprüche, **dadurch gekennzeichnet, dass** diese das Produkt einer Polymerisationsreaktion in einer wässrigen Lösung W der Polyhydroxybenzene R und H und des Formaldehyds/der Formaldehyde F aufweist, in Anwesenheit des im Lösungsmittel gelösten kationischen Polyelektrolyts P und eines sauren Katalysators C, wobei das Produkt der Polymerisationsreaktion das kationische Polyelektrolyt mit einem Massenanteil zwischen 0,2% und 2% umfasst.

10. Gelierte Zusammensetzung nach einem der vorhergehenden Ansprüche, **dadurch gekennzeichnet, dass** der wasserlösliche kationische Polyelektrolyt P ein organisches Polymer ist, welches gewählt ist aus der Gruppe, umfassend Salze des quartären Ammoniums, Vinylpyridiniumpolychlorid, Polyethylenimin, Polyvinylpyridin, Allylaminpolychlorhydrat, Trimethylammoniumethylmethacrylat-Polychlorid, poly(acrylamid-co-dimethylammoniumchlorid) und deren Mischungen.

11. Gelierte Zusammensetzung nach Anspruch 10, **dadurch gekennzeichnet, dass** der wasserlösliche kationische Polyelektrolyt P ein Salz ist, welches Einheiten aus einem quartären Ammonium umfasst, welches gewählt ist aus Poly(diallyldimethylammoniumhalogeniden) und vorzugsweise Poly(diallyldimethylammoniumchlorid) oder Poly(diallyldimethylammoniumbromid) ist.

12. Verwendung einer gelierten Zusammensetzung nach einem der vorhergehenden Ansprüche zur thermischen Isolierung eines Gebäudes oder zur Bildung eines Vorläufers einer Superkondensator-Kohlenstoffelektrode.

13. Verfahren zur Zubereitung einer gelierten Zusammensetzung zur Bildung eines Aerogels nach einem der Ansprüche 1 bis 11, **dadurch gekennzeichnet, dass** es umfasst:
a) eine Polymerisation bei Raumtemperatur in einer wässrigen Lösung W der Polyhydroxybenzene R und H und des Formaldehyds/der Formaldehyde F in Anwesenheit des in dem Lösungsmittel gelösten kationischen Polyelektrolyts P und eines sauren Katalysators C zum Erhalt einer das Harz enthaltenden Lösung,
b) eine Gelierung der in a) erhaltenen Lösung zum Erhalt eines Hydrogels des Harzes, und
c) Trocknung des in b) erhaltenen Hydrogels zum Erhalt des Aerogels.

14. Zubereitungsverfahren nach Anspruch 13,
**dadurch gekennzeichnet, dass** der Schritt a) durchgeführt wird:
a1) durch Lösen in der wässrigen Lösung, gebildet aus Wasser, den Polyhydroxybenzenen R und H und dem kationischen Polyelektrolyt P, welcher mit einem Massenanteil in der Zusammensetzung von zwischen 0,2 und 2% verwendet wird, dann
a2) durch Zugeben des Formaldehyds/der Formaldehyde F und dann des sauren Katalysators zur erhaltenen Lösung.

15. Zubereitungsverfahren nach Anspruch 13 oder 14,
**dadurch gekennzeichnet, dass** es vor dem Schritt a) einen Schritt a0) umfasst, welcher ein Mischen eines ersten nicht substituierten Polyhydroxybenzens R und einer Vorsmischung H umfasst,
dass die Vormischung H als Nebenmasse ein zweites nicht substituiertes Polyhydroxybenzen R' umfasst, das mit dem ersten nicht substituierten Polyhydroxybenzen identisch ist oder nicht und als Hauptmasse das wenigstens eine substituierte Polyhydroxybenzen, und
dass in Schritt a0) die Vormischung H mit gleicher oder größerer Masse bezüglich des ersten nicht substituierten Polyhydroxybenzens R verwendet wird.

16. Zubereitungsverfahren nach Anspruch 15,
**dadurch gekennzeichnet, dass** die Vormischung H das zweite nicht substituierte Polyhydroxybenzen R' mit einem Massenanteil kleiner 10% und mehrere substituierte Polyhydroxybenzene mit einem Massenanteil größer 80% aufweist.

17. Zubereitungsverfahren nach Anspruch 15 oder 16,
**dadurch gekennzeichnet, dass** das erste und zweite nicht substituierte Polyhydroxybenzen R und R' jeweils Resorcinol ist und dass die Vormischung H mehrere substituierte Polyhydroxybenzene umfasst, umfassend:
- mit einem Massenanteil zwischen 60 und 70% Methylresorcinole, die einen Hauptmassenanteil 5-Methylresorcinol und einen Nebenmassenanteil 4-Methylresorcinol und 2-Methylresorcinol umfassen, und
- mit einem Massenanteil zwischen 20 und 30%:
* Dimethylresorcinole, welche 2,5-Dimethylresorcinol und 4,5-Dimethylresorcinol umfassen, und
* ein Etyhlresorcinol, welches 5-Ethylresorcinol ist.

18. Zubereitungsverfahren nach einem der Ansprüche 13 bis 17, **dadurch gekennzeichnet, dass** der Schritt c) zum Erhalten des Aerogels als Trocknung in feuchter Luft durchgeführt wird, beispielsweise in einer Wärmekammer, ohne Lösungsmittelaustausch sowie ohne Trocknung mittels überkritischem Fluid.

## Claims

1. A gelled carbon-based composition forming an organic polymeric monolithic gel which is capable of forming an aerogel by drying and a porous carbon monolith by pyrolysis of said aerogel, the composition comprising a resin derived at least partly from polyhydroxybenzenes H and from formaldehyde(s) F, said polyhydroxybenzenes comprising at least one unsubstituted polyhydroxybenzene R' and at least one polyhydroxybenzene substituted with one or more alkyl groups, **characterized in that** said polyhydroxybenzenes comprise several said unsubstituted polyhydroxybenzenes R and R' and **in that** the composition comprises a water-soluble cationic polyelectrolyte P.

2. The gelled composition as claimed in claim 1, **characterized in that** the composition has a heat conductivity of less than or equal to 40 mW.m⁻¹.K⁻¹.

3. The gelled composition as claimed in claim 1 or 2, **characterized in that** the composition comprises a product of a mixing reaction, in an aqueous solvent:
- of a first said unsubstituted polyhydroxybenzene R, and
- of a premix H comprising:
* in minor amount by mass, a second said unsubstituted polyhydroxybenzene R', which is identical to or different from said first unsubstituted polyhydroxybenzene, and
* in major amount by mass, said at least one substituted polyhydroxybenzene.

4. The gelled composition as claimed in claim 3, **characterized in that**, in said product of the mixing reaction, said premix H is present in equal or major amount by moles relative to said first unsubstituted polyhydroxybenzene R.

5. The gelled composition as claimed in claim 4, **characterized in that** said premix H comprises, in a mass fraction of less than 10%, said second unsubstituted polyhydroxybenzene R', and, in a mass fraction of greater than 80%, several said substituted polyhydroxybenzenes.

6. The gelled composition as claimed in one of claims 3 to 5, **characterized in that** said first and second unsubstituted polyhydroxybenzenes R and R' are each a resorcinol, and **in that** the composition comprises several said substituted polyhydroxybenzenes comprising in major amount by mass methyl resorcinols and in minor amount by mass dimethyl resorcinols and an ethyl resorcinol.

7. The gelled composition as claimed in claim 6, **characterized in that** said methyl resorcinols comprise in major amount by mass 5-methyl resorcinol and in minor amount by mass 4-methyl resorcinol and 2-methyl resorcinol, **in that** said dimethyl resorcinols comprise 2,5-dimethyl resorcinol and 4,5-dimethyl resorcinol, and **in that** said ethyl resorcinol is 5-ethyl resorcinol.

8. The gelled composition as claimed in one of the preceding claims, **characterized in that** the composition has for said aerogel a density of less than or equal to 0.20 and a compression strength, defined for compression of a plate formed from said aerogel with a thickness equal to 9 mm along 50% of said thickness, which is greater than or equal to 0.15 MPa, or even 2 MPa.

9. The gelled composition as claimed in one of the preceding claims, **characterized in that** it comprises the product of a polymerization reaction in an aqueous solvent W of said polyhydroxybenzenes R and H and formaldehyde(s) F, in the presence of said cationic polyelectrolyte P dissolved in the solvent and of an acid catalyst C, the product of the polymerization reaction comprising said cationic polyelectrolyte in a mass fraction of between 0.2% and 2%.

10. The gelled composition as claimed in one of the preceding claims, **characterized in that** said water-soluble cationic polyelectrolyte P is an organic polymer chosen from the group consisting of quaternary ammonium salts, poly(vinylpyridinium chloride), poly(ethyleneimine), poly(vinylpyridine), poly(allylamine hydrochloride), poly(trimethylammonium ethylmethacrylate chloride), poly(acrylamide-co-dimethylammonium chloride), and mixtures thereof.

11. The gelled composition as claimed in claim 10, **characterized in that** said water-soluble cationic polyelectrolyte P is a salt comprising units derived from a quaternary ammonium chosen from poly(diallyldimethylammonium halides) and is preferably poly(diallyl-dimethylammonium chloride) or poly(diallyldimethylammonium bromide).

12. The use of a gelled composition as claimed in one of the preceding claims for the heat insulation of a building or for forming a carbon-based electrode precursor of a supercapacitor.

13. A process for preparing a gelled composition forming an aerogel as claimed in one of claims 1 to 11, **characterized in that** it comprises:
a) a polymerization at room temperature in an aqueous solvent W of said polyhydroxybenzenes R and H and formaldehyde(s) F, in the presence of said cationic polyelectrolyte P dissolved in the solvent and of an acid catalyst C, to obtain a solution comprising said resin,
b) gelation of the solution obtained in a) to obtain a hydrogel of said resin, and
c) drying of the hydrogel obtained in b) to obtain said aerogel.

14. The preparation process as claimed in claim 13, **characterized in that** step a) is performed:
a1) by dissolving in said aqueous solvent consisting of water said polyhydroxybenzenes R and H and said cationic polyelectrolyte P, which is used in a mass fraction in the composition of between 0.2% and 2%, and then
a2) by adding to the solution obtained said formaldehyde(s) F and then said acidic catalyst C.

15. The preparation process as claimed in claim 13 or 14, **characterized in that** it comprises, before step a), a step a0) comprising mixing of a first said unsubstituted polyhydroxybenzene R and of a premix H,
**in that** said premix H comprises, in minor amount by mass, a second said unsubstituted polyhydroxybenzene R', which is identical to or different from said first unsubstituted polyhydroxybenzene, and, in major amount by mass, said at least one substituted polyhydroxybenzene, and
**in that**, in step a0), said premix H is used in equal or major amount by mass relative to said first unsubstituted polyhydroxybenzene R.

16. The preparation process as claimed in claim 15, **characterized in that** said premix H comprises, in a mass fraction of less than 10%, said second unsubstituted polyhydroxybenzene R', and, in a mass fraction of greater than 80%, several said substituted polyhydroxybenzenes.

17. The preparation process as claimed in claim 15 or 16, **characterized in that** said first and second unsubstituted polyhydroxybenzenes R and R' are each a resorcinol, and **in that** said premix H comprises several said substituted polyhydroxybenzenes comprising:
- in a mass fraction of between 60% and 70%, methyl resorcinols which comprise in major amount by mass 5-methyl resorcinol and in minor amount by mass 4-methyl resorcinol and 2-methyl resorcinol, and
- in a mass fraction of between 20% and 30%:
* dimethyl resorcinols, which comprise 2,5-dimethyl resorcinol and 4,5-dimethyl resorcinol, and
* an ethyl resorcinol, which is 5-ethyl resorcinol.

18. The preparation process as claimed in one of claims 13 to 17, **characterized in that** step c) is performed by drying in humid air, for example in an oven, without solvent exchange or drying with supercritical fluid, to obtain said aerogel.
